# EUROPÄISCHE PATENTSCHRIFT

(11) **EP 0 544 856 B1**
(45) Veröffentlichungstag und Bekanntmachung des Hinweises auf die Patenterteilung: **14.08.1996**
(21) Anmeldenummer: 92910745.6
(22) Anmeldetag: 26.05.1992
(51) Int. Cl.: F04C 11/00

(54) **ELEKTROMOTORISCH ANGETRIEBENE HYDRAULIKPUMPE**
ELECTRIC-MOTOR-DRIVEN HYDRAULIC PUMP
POMPE HYDRAULIQUE COMMANDEE PAR MOTEUR ELECTRIQUE

(30) Priorität: 22.06.1991 DE 4120665
(43) Veröffentlichungstag der Anmeldung: 09.06.1993
(73) Patentinhaber: ITT Automotive Europe GmbH, 60488 Frankfurt (DE)
(72) Erfinder: HENEIN, Nabil, D-6100 Darmstadt (DE); BEER, Wilhelm, D-6090 Rüsselsheim 7 (DE); VILE, David, W-4056 Schwalmtal am Rhein (DE)
(86) Internationale Anmeldenummer: EP9201178
(87) Internationale Veröffentlichungsnummer: WO9300513

(56) Entgegenhaltungen:
- DE-A- 3 438 680
- DE-A- 3 700 664
- DE-A- 4 037 180
- DE-U- 9 006 632
- US-A- 4 998 865

## Beschreibung

Die Erfindung betrifft eine elektromotorisch angetriebene Hydraulikpumpe, bei der Steuerungsvorrichtung, Elektromotor und hydraulischer Pumpenmotor in einem Gehäuse untergebracht sind.

Eine ähnliche Pumpe, die als Kraftstoff-Förderpumpe dient, ist aus der DE 37 00 664 Al bekannt. Diese in einen Kraftstofftank eingesetzte Pumpe hat dort relativ viel Platz und ist deshalb nicht besonders platzsparend im Aufbau. Insbesondere ist neben der Pumpe ein großer Filter angeordnet.

Aus der DE-A-34 38 680 ist eine elektromotrisch angetriebene Kraftstoff-Förderpumpe bekannt, bei der Steuerungsvorrichtung, Elektromotor und hydraulischer Pumpenteil sowie ein Filter in einem gemeinsamen Gehäuse untergebracht sind. Dabei werden der Elektromotor und die einzelnen Bauteile des hydraulischen Pumpenteils nacheinander in das Gehäuse eingesetzt, eine Vormontage des Pumpenteils ist nicht vorgesehen.

Die US-A-4,998,865 zeigt eine Flügelzellenpumpe, die aus einer Pumpeneinheit, Motoreinheit und einer Steuerungseinheit besteht, welche innerhalb eines zylindrischen Gehäuse angeordnet sind.

Bei anderen Hydraulikpumpen, die beispielsweise in Kraftfahrzeugen eine Hilfskraftlenkung oder ein Antiblockiersystem mit Druckmittel versorgen, ist ein kompakter Aufbau wegen des kleinen zur Verfügung stehenden Bauraumes im Motorraum jedoch besonders wichtig.

Aufgabe der vorliegenden Erfindung ist es daher, eine von einem Elektromotor angetriebene Hydraulikpumpe so auszubilden, daß sie deutlich weniger Platz benötigt als bekannte Pumpen und durch Integration aller Elemente auch montagefreundlich ist.

Die Lösung der gestellten Aufgabe gelingt durch die in Anspruch 1 angegebene Merkmalskombination. Die vorgeschlagene Modulbauweise erlaubt eine sehr kostengünstige Herstellung der erfindungsgemäßen Pumpe.

Vorteilhafterweise ist die Steuerungsvorrichtung in den Elektromotor bzw. einen Teil seines Gehäuses integriert.

Eine noch kompaktere Bauform ergibt sich, wenn der Elektromotor ein kollektorloser Motor ist, da dieser an sich kleiner ist als ein Kollektor-Elektromotor.

Die im Anspruch 4 vorgeschlagene Anordnung erlaubt das Verschachteln verschiedener Bauteile, da eine Trennung von Elektromotor und Hydraulikteil entfällt. Auch das Einsparen der pumpenseitigen Lagerung des Motorrotors bedeutet eine Verkleinerung und Verbilligung des Motorpumpenaggregats.

Mit Vorteil ist die Pumpe als schlitzgesteuerte Radialkolbenpumpe ausgeführt, wobei durch geeignete Anordnung der Zu- und Ableitungskanäle sowie der Filter eine optimale Raumausnutzung erzielbar ist.

Die erfindungsgemäße Pumpe ist vorgesehen für die Verwendung bei einer Hydraulikanlage eines Kraftfahrzeugs, insbesondere einer elektro-hydraulischen Hilfskraftlenkung, einer schlupfgeregelten Bremsanlage oder einer hydraulischen Fahrwerksregelung.

Die Erfindung wird nachfolgend anhand von mehreren in den beiliegenden Zeichnungen dargestellten Beispielen erläutert.

Es zeigt
- Fig. 1: eine Hydraulikanlage bei der alle Elemente in einem unterteilten Gehäuse untergebracht sind,
- Fig. 2: eine extrem kompakte Anordnung von kollektorlosem Motor mit integrierter Steuerungsvorrichtung, gemeinsame Rotorlagerung von Pumpe und Motor und Filter im Motorbereich,
- Fig. 3: den Zusammenbau der Module als Explosionszeichnung,
- Fig. 4: ein Motorpumpenaggregat mit kollektorlosem Motor und
- Fig. 5: ein anderes Motorpumpenaggregat mit getauchtem Motor.

Zur Vereinfachung werden gleiche Elemente mit den gleichen Bezugszeichen versehen und jeweils nur die für die Erfingung wesentlichen Details erläutert.

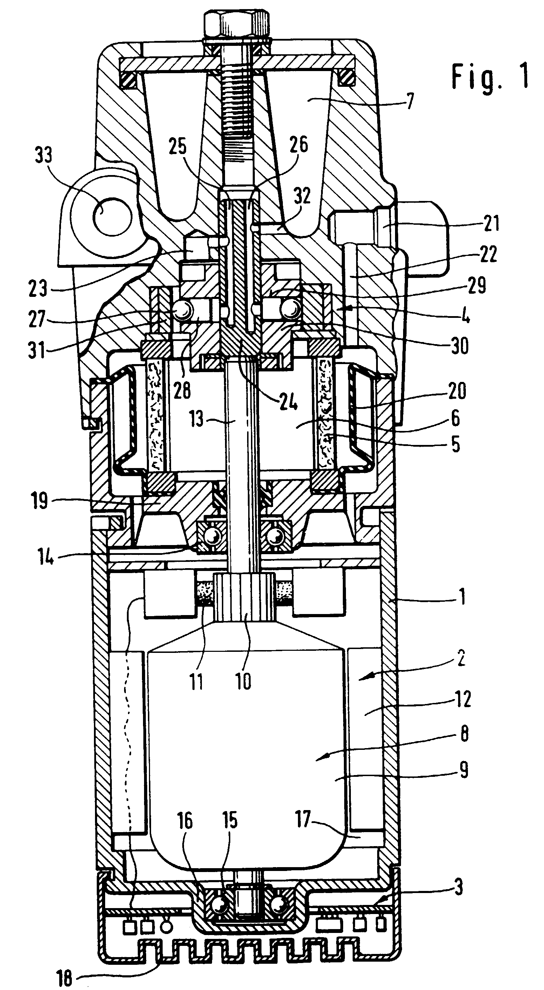

Das Aggregat in Fig. 1 besteht aus in einem Gehäuse 1 angeordnetem Elektromotor 2, Steuerungsvorrichtung 3, hydraulischem Pumpenteil 4, Filter 5, Tank 6 und Resonator 7. Der Elektromotor 2 besteht im wesentlichen aus einem Rotor 8 mit Wicklung 9 und Kollektor 10, den Motorbürsten 11 und den Magneten 12. Beiderseits des Motors 2 ist die Motorwelle 13 in je einem Lager 14, 15 gelagert.

Das Lager 15 befindet sich in einem Abschnitt 16 des Gehäuses 1, der den Motorraum 17 von der Steuerungsvorrichtung 3 trennt. Zur Kühlung der Steuerungsvorrichtung 3 sind außen am Gehäuse 1 Kühlrippen 18 vorgesehen.

Das Lager 14 ist in die Trennwand 19 zwischen Motor 2 und Hydraulikteil 4 eingesetzt. Die Trennwand 19 wird von der Motorwelle 13 durchdrungen, die abgedichtet in ihr geführt ist. An der Trennwand 19 ist außerdem eine flexible, den Tank 6 begrenzende Membran 20 befestigt. Der Tank 6 ist durch den Filter 5 geteilt. Das Hydraulikmedium strömt vom Einlaßanschluß 21 durch den axialen Kanal 22 in den äußeren Tankbereich zwischen Membran 20 und Filter 5, von dort in den inneren Tankteil und durch einen weiteren Kanal 23 zur Saugseite der Pumpe 4.

Bei der Pumpe 4 handelt es sich um eine schlitzgesteuerte Radialkolbenpumpe, wobei in der Steuerwelle 24 ein Saugkanal 25 und ein Druckkanal 26 ausgebildet sind. Die Kolben sind als Kugelkolben 27 mit Dichtelement 28 ausgeführt und in Bohrungen 29 des Pumpenrotors 30 gleitend geführt. Der Pumpenrotor 30 ist mit der Motorwelle 13 gekoppelt und dreht sich mit ihr. Die Kugelkolben 27 rollen auf dem exzentrisch in das Gehäuse 1 eingesetzten Hubring 31 ab und fördern Hydraulikmedium vom Saugkanal 25 in den Druckkanal 26.

Von dort gelangt das Hydraulikmedium durch den radialen Kanal 32 in den Resonator 7, der über einen nicht gezeigten Kanal mit dem Auslaßanschluß 33 verbunden ist.

Bei allen weiteren Figuren wird, um Wiederholungen zu vermeiden, nur noch auf die Unterschiede zu der oben beschriebenen Hydraulikpumpe eingegangen.

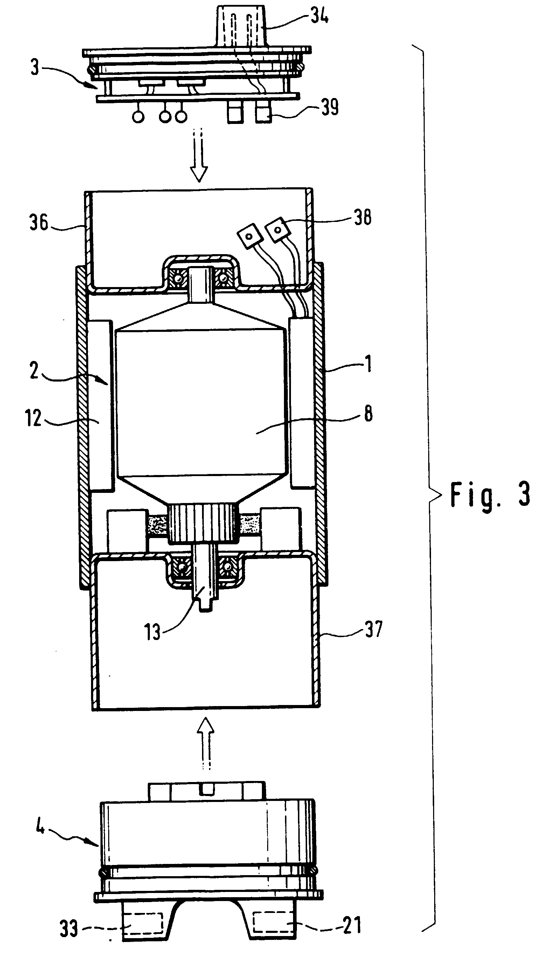

Fig. 3 zeigt ein anderes Motorpumpenaggregat in Modulbauweise, die in der gewählten Explosionsdarstellung besonders deutlich wird. Das Gehäuse 1 besteht aus dem eigentlichen Motorgehäuse mit zwei zylindrischen Fortsätzen 36, 37 zur Aufnahme der Steuerungsvorrichtung 3 und des Hydraulikteils 4. Im Fortsatz 36 ist noch ein elektrischer Anschluß 38 vorgesehen, um den Motor 2 mit der Steuerungsvorrichtung 3 bzw. dessen elektrischem Anschluß 39 zu verbinden. Der Hydraulikteil 4 und die Steuerungsvorrichtung 3 werden in den Fortsätzen 36, 37 durch Eindrückungen, Einscherungen oder Umbördeln der Fortsatzränder sicher gehalten.

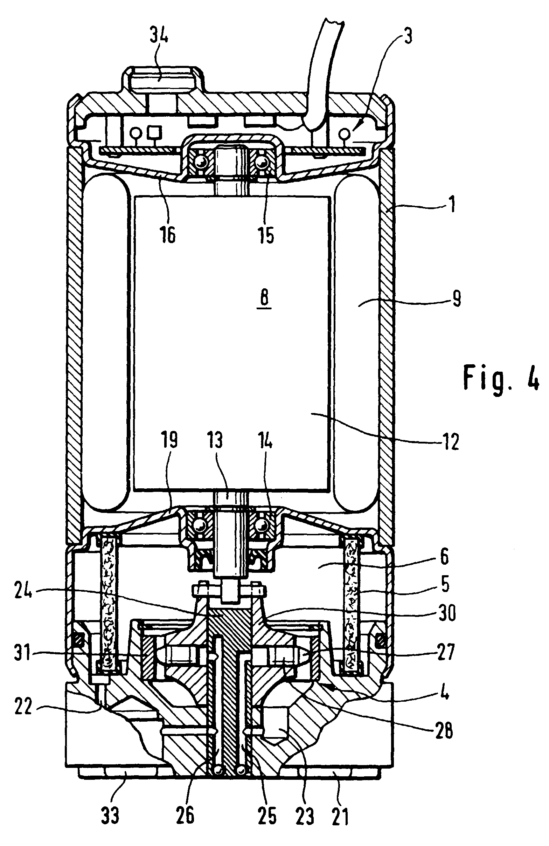

Fig. 4 zeigt eine weitere Ausführungsform, wobei der Motor 2 als kollektorloser Motor ausgeführt ist. In diesem Fall bilden die Magnete 12 den Rotor 8, und die Wicklung 9 ist außen angeordnet und dreht sich nicht. Dieser Motor 2 benötigt weniger Platz als herkömmliche Motoren. In dieser Figur ist die Kopplung zwischen der beidseitig des Rotors 8 gelagerten Motorwelle 13 und dem Pumpenrotor 30 besonders deutlich zu erkennen.

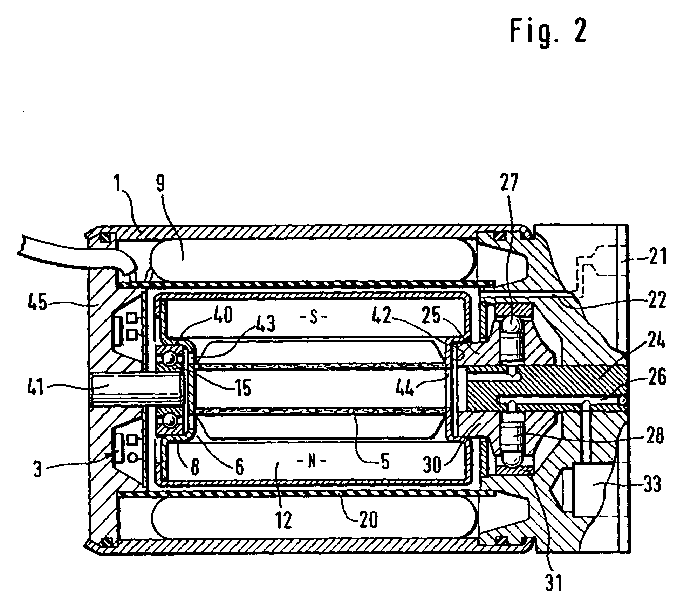

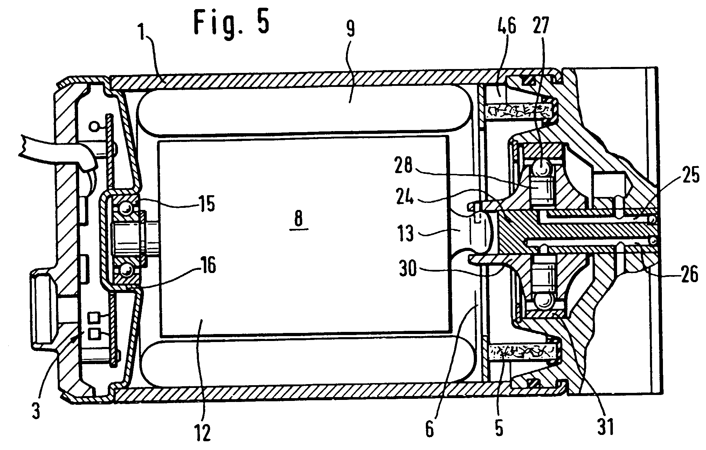

Auch in den Figuren 5 und 2 ist der Motor 2 jeweils als kollektorloser Motor ausgeführt und zusätzlich "getaucht". D.h. der Motorrotor 8 läuft jeweils im Hydraulikmedium und nur die Wicklungen 9 sind - bei der Ausführungsform nach Fig. 2 - durch die Membran 20 vor Feuchtigkeit geschützt. Im Beispiel der Fig. 5 sind auch die Wicklungen im Hydraulikmedium angeordnet und werden dadurch besonders gut gekühlt. Vom Einlaßanschluß besteht eine nicht gezeigte Verbindung zum Ringraum 46. Aus dem Ringraum 46 gelangt das Hydraulikmedium durch den Filter 5 in den Tank 6.

Im Beispiel der Fig. 5 ist außerdem die Motorwelle 13 nur auf der dem Hydraulikteil 4 abgewandten Seite des Motors 2 separat gelagert und auf der Pumpenseite direkt mit dem Pumpenrotor 30 gekoppelt und über letzteren gleichzeitig gelagert. Diese Maßnahme erlaubt eine weitere Verkleinerung des Motorpumpenaggregats.

Die Ausführung nach Fig. 2 ist extrem kompakt. Wieder ist die Motorwelle 13 nur auf der Seite der Steuerungsvorrichtung 3 separat gelagert. Um Platz zu sparen, ist das Lager 15 in einer Ausnehmung 40 des Motorrotors 8 auf einem Lagerstift 41 vorgesehen. Auf der anderen Seite des Rotors 8 befindet sich eine weitere Ausnehmung 42 in die der Pumpenrotor teilweise hineinragt. Durch eine besondere Zuführung des Hydraulikmediums befindet sich der Tank 6 im Bereich des Motorrotors 8. Das Hydraulikmedium strömt vom Einlaßanschluß 21 durch den axialen Kanal 22 zwischen Motorrotor 8 und Membran 20 zum der Steuerungsvorrichtung 3 zugewandten Ende. Dort fließt es durch Öffnungen 43 in der Ausnehmung 40 ins Rotorinnere, durch den Filter 5 und eine zentrale Öffnung 44 in der Ausnehmung 42 zum Saugkanal 25. Von der Pumpe 4 wird es über den Druckkanal 26 zum Auslaßanschluß 23 gefördert.

Die Steuerungsvorrichtung 3 ist in den Deckel 45 des Elektromotors integriert. Dieser Deckel 45 dient auch als Halterung des Lagerstifts 41. Wicklungen 9, Deckel 45 und Lagerstift 41 bilden ein Modul. Ein zweites Modul wird vom Hydraulikteil 4 gebildet, wobei das Gehäuse 1 wahlweise zu einem der Module gehört. Beim Zusammenbau wird der Motorrotor 8 mit den Lagerteilen 15 zwischen beide Module gesetzt und von diesen gehalten.

## Patentansprüche

1. Elektromotorisch angetriebene Hydraulikpumpe, bei der Steuerungsvorrichtung (3), Elektromotor (2) und hydraulischer Pumpenteil und zusätzlich ein Tank (6) und/oder ein Resonator (7) und/oder mindestens ein Filter (5) in einem gemeinsamen Gehäuse (1) untergebracht sind, dadurch **gekennzeichnet,** daß der Elektromotor (2) ein Gehäuse (1) aufweist, welches beidseitig mit zylindrischen Fortsätzen (36, 37) ausgerüstet ist, wobei in einem Fortsatz (36) ein elektrischer Anschluß (38) vorgesehen ist, und daß in den Fortsatz (36) mit dem elektrischen Anschluß (38) die Steuerungsvorrichtung (3) und in dem anderen Fortsatz (37) der Hydraulikteil (4) einsetzbar ist, wobei die Steuerungsvorrichtung (3) durch einen elektrischen Anschluß (39) mit dem elektrischen Anschluß (38) des Motors (2) verbindbar ist, und daß Steuerungsvorrichtung (3) und Hydraulikteil (4) in den Fortsätzen (36, 37) sicherbar sind.

2. Elektromotorisch angetriebene Hydraulikpumpe nach Anspruch 1, dadurch **gekennzeichnet,** daß die Steuerungsvorrichtung (3) in den Elektromotor (2) bzw. einen Teil von diesem integriert ist.

3. Elektromotorisch angetriebene Hydraulikpumpe nach einem der vorhergehenden Ansprüche, dadurch **gekennzeichnet,** daß der Elektromotor (2) ein kollektorloser Motor ist.

4. Elektromotorisch angetriebene Hydraulikpumpe nach einem der vorhergehenden Ansprüche, dadurch **gekennzeichnet,** daß der Elektromotor (2) "getaucht" ist, d.h. der Rotor (8) des Motors (2) befindet sich im hydraulischen Medium.

5. Elektromotorisch angetriebene Hydraulikpumpe nach Anspruch 4, dadurch **gekennzeichnet,** daß der Motorrotor (8) pumpenseitig nicht separat gelagert, sondern direkt mit dem Pumpenrotor (30) verbunden und über diesen gelagert ist.

6. Elektromotorisch angetriebene Hydraulikpumpe nach einem der vorhergehenden Ansprüche dadurch **gekennzeichnet,** daß die Pumpe (4) eine schlitzgesteuerte Radialkolbenpumpe ist.

7. Verwendung einer elektromotorisch angetriebenen Hydraulikpumpe nach einem der vorhergehenden Ansprüche bei einer Hydraulikanlage eines Kraftfahrzeuges, insbesondere einer elektrohydraulischen Hilfskraftlenkung, einer schlupfgeregelten Bremsanlage oder einer hydraulischen Fahrwerksregelung.

8. Verfahren zur Herstellung einer elektromotorisch angetriebenen Hydraulikpumpe nach einem der vorhergehenden Ansprüche, dadurch **gekennzeichnet,** daß Steuerungsvorrichtung (3) und Hydraulikteil (4) durch Kaltumformen der Fortsätze (36, 37) in diesen gesichert sind.

## Claims

1. A hydraulic pump driven by an electric motor in which the control apparatus (3), the electric motor (2) and the hydraulic pump section and, in addition, a tank (6) and/or a resonator (7) and/or at least one filter (5) are accommodated within a common housing (1),
**characterized** in that the electric motor (2) includes a housing (1) which is formed with cylindrical projections (36, 37) on either side, one projection (36) having an electric connection (38), and in that the control apparatus (3) is insertable into the projection (36) with the electric connection (38) and the hydraulic section (4) is insertable into the other projection (37), the control apparatus (3) being connectible to the electric connection (38) of the motor (2) by way of an electric connection (39), and in that the control apparatus (3) and the hydraulic section (4) are adapted to be secured in the projections (36, 37).

2. An electromotively driven hydraulic pump as claimed in claim 1,
**characterized** in that the control apparatus (3) is integrated in the electric motor (2) or in a part of it.

3. An electromotively driven hydraulic pump as claimed in any one of the preceding claims,
**characterized** in that the electric motor (2) is a motor without commutator.

4. An electromotively driven hydraulic pump as claimed in any one of the preceding claims, **characterized** in that the electric motor (2) is "submerged", that means, that the rotor (8) of the motor (2) is positioned in the hydraulic medium.

5. An electromotively driven hydraulic pump as claimed in claim 4,
**characterized** in that the motor rotor (8) is not supported separately on the side of the pump but is coupled directly to the pump rotor (30) and is supported by way of the pump rotor.

6. An electromotively driven hydraulic pump as claimed in any one of the preceding claims,
**characterized** in that the pump (4) is a slot-controlled radial piston pump.

7. Use of an electromotively driven hydraulic pump as claimed in any one of the preceding claims in a hydraulic system of an automotive vehicle, in particular in an electrohydraulic power steering system, in a slip-controlled brake system or in a hydraulic suspension control system.

8. A method of manufacturing an electromotively driven hydraulic pump as claimed in any one of the preceding claims,
**characterized** in that the control apparatus (3) and the hydraulic section (4) are secured in the projections (36, 37) by cold-working of the projections.

## Revendications

1. Pompe hydraulique entraînée par un moteur électrique et dans laquelle un dispositif de commande (3), un moteur électrique (2) et une partie hydraulique de la pompe et en outre un réservoir (6) et/ou un résonateur (7) et/ou au moins, un filtre (5) sont logés dans un boîtier commun (1), caractérisée en ce que le moteur électrique (2) comporte une carcasse (1), qui comporte, des deux côtés, des prolongements cylindriques (36,37), une borne électrique (38) étant prévue dans un prolongement (36), et que le dispositif de commande (3) est inséré dans le prolongement (36) au moyen d'une borne électrique (38) et que la partie hydraulique (4) est insérée dans l'autre prolongement (37), le dispositif de commande (3) pouvant être relié par une borne électrique (39) à la borne électrique (38) du moteur (2), et que le dispositif de commande (3) et la partie hydraulique (4) peuvent être bloqués dans les prolongements (36,37).

2. Pompe hydraulique entraînée par un moteur électrique selon la revendication 1, caractérisée en ce que le dispositif de commande (3) est intégré dans le moteur électrique (2) ou dans une partie de ce dernier.

3. Pompe hydraulique entraînée par un moteur électrique selon l'une des revendications précédentes, caractérisée en ce que le moteur électrique (2) est un moteur sans collecteur.

4. Pompe hydraulique entraînée par un moteur électrique selon l'une des revendications précédentes, caractérisée en ce que le moteur électrique (2) est "immergé", c'est-à-dire que le rotor (8) du moteur (2) est situé dans le fluide hydraulique.

5. Pompe hydraulique entraînée par un moteur électrique selon la revendication 4, caractérisée en ce que le rotor (8) du moteur n'est pas supporté séparément côté pompe, mais est relié directement au rotor (30) de la pompe et est supporté par ce dernier.

6. Pompe hydraulique entraînée par un moteur électrique selon l'une des revendications précédentes, caractérisée en ce que la pompe (4) est une pompe à pistons radiaux, commandée par lumières.

7. Utilisation d'une pompe hydraulique entraînée par un moteur électrique selon l'une des revendications précédentes, dans une installation hydraulique d'un véhicule automobile, notamment d'une direction assistée électrohydraulique, d'une installation de frein à régulation du glissement ou d'une unité hydraulique de régulation du châssis.

8. Procédé pour fabriquer une pompe hydraulique entraînée par un moteur électrique selon l'une des revendications précédentes, caractérisé en ce que le dispositif de commande (3) et la partie hydraulique (4) sont bloqués par déformation à froid des prolongements (36,37) dans ces derniers.
